# EUROPÄISCHE PATENTANMELDUNG

(11) **EP 3 338 924 A1**
(43) Veröffentlichungstag der Anmeldung: **27.06.2018**
(21) Anmeldenummer: 16206535.3
(22) Anmeldetag: 23.12.2016
(51) Int. Cl.: B23B 51/04, B23K 9/032, B23K 26/302

(54) **VERFAHREN ZUR HERSTELLUNG EINES BOHRSCHAFTES FÜR EINE BOHRKRONE**

(71) Anmelder: HILTI Aktiengesellschaft, 9494 Schaan (LI)
(72) Erfinder: Schroeder, Florian, 7304 Maienfeld (CH); Weber, Christoph, 6315 Oberägeri (CH); Schneider, Roland, 6824 Schlins (AT)
(74) Vertreter: Hilti Aktiengesellschaft Corporate Intellectual Property

(57) **Zusammenfassung**

Verfahren zur Herstellung eines Bohrschaftes (18) für eine Bohrkrone (10), die einen Bohrkern (26) mit einem Kerndurchmesser (d₁) und ein Bohrloch (27) mit einem Bohrlochdurchmesser (d₂) in einem Werkstück (25) erzeugt, bei dem N, N ≥ 1 Bandmaterialien zu einem Rohrkörper geformt werden und der Rohrkörper an den Bandkanten über N Verbindungsschweißnähte stoffschlüssig verbunden wird, wobei beim stoffschlüssigen Verbinden der Bandkanten mindestens ein Nahtmaterial verwendet wird und bei mindestens einer Verbindungsschweißnaht ein Überstand gegenüber dem Rohrkörper erzeugt wird.

## Beschreibung

### Technisches Gebiet

Die vorliegende Erfindung betrifft ein Verfahren zur Herstellung eines Bohrschaftes für eine Bohrkrone gemäß dem Oberbegriff des Anspruchs 1.

### Stand der Technik

Bohrkronen bestehen aus mehreren Bohrkronenabschnitten, die als Schneidabschnitt und Bohrschaftabschnitt ausgebildet sind. Der Schneidabschnitt umfasst einen Ringabschnitt und ein oder mehrere Schneidsegmente, die mit dem Ringabschnitt verschweißt, verlötet, verschraubt oder in einer anderen geeigneten Befestigungsart am Ringabschnitt befestigt sind. Der Bohrschaftabschnitt umfasst einen rohrförmigen Bohrschaft, einen Deckel und ein Einsteckende, über das die Bohrkrone in der Werkzeugaufnahme eines Kernbohrgerätes befestigt wird. Der Bohrschaft wird aus einem rohrförmigen Material gefertigt oder aus einem ebenen Bandmaterial, das zu einem Rohr umgeformt und an den Bandkanten durch Längsnahtschweißen verbunden wird. Der Schneidabschnitt und Bohrschaftabschnitt sind mittels einer Verbindungseinrichtung lösbar oder unlösbar verbunden. Bei Bohrkronen mit einer unlösbaren Verbindungseinrichtung zwischen dem Schneidabschnitt und Bohrschaftabschnitt können der Ringabschnitt des Schneidabschnitts und der Bohrschaft monolithisch ausgebildet sein, alternativ kann der Ringabschnitt stoffschlüssig mit dem Bohrschaft verbunden sein.

Im Bohrbetrieb erzeugt eine Bohrkrone in einem Werkstück einen Bohrkern mit einem Kerndurchmesser und ein Bohrloch mit einem Bohrlochdurchmesser. Die Schneidsegmente bilden einen Schneidring mit einem Innendurchmesser, der dem Kerndurchmesser entspricht, und einem Außendurchmesser, der dem Bohrlochdurchmesser entspricht. Beim Bohren wird zwischen Nassbohren und Trockenbohren unterschieden. Bohrkronen zum Nassbohren (Nassbohrkronen) unterscheiden sich im Aufbau von Bohrkronen zum Trockenbohren (Trockenbohrkronen). Beim Nassbohren ist eine Kühl- und Spülflüssigkeit erforderlich, die als Kühlflüssigkeit die Schneidsegmente der Bohrkrone kühlt und als Spülflüssigkeit Bohrklein aus dem Bohrloch abtransportiert. Saubere Kühl- und Spülflüssigkeit wird in der Regel über einen Innenspalt zwischen dem Bohrkern und dem Bohrschaft zugeführt und mit Bohrklein versetzte, verbrauchte Kühl- und Spülflüssigkeit über einen Außenspalt zwischen dem Bohrschaft und dem Bohrloch abgeführt.

Nassbohrkronen, die sowohl einen Innenspalt zwischen Bohrkern und Bohrschaft als auch einen Außenspalt zwischen Bohrschaft und Bohrloch aufweisen, werden im Bohrbetrieb ausschließlich über den Schneidabschnitt geführt, der gesamte Bohrschaft weist keine Führung auf. Die mangelnde Führung des Bohrschaftes kann während des Bohrens zu unerwünschten Bewegungen der Bohrkrone führen, die die Qualität des Bohrloches verschlechtern. Je stärker die Bewegungen der Bohrkrone sind, umso stärker kann die Geometrie des Bohrloches von der Kreisform abweichen. Außerdem können durch Krafteinwirkung des Bohrkerns oder des Bohrloches auf den Bohrschaft elastische Verformungen des Bohrschaftes auftreten.

Um die Führung einer Nassbohrkrone zu verbessern, sind Bohrkronen ohne Innenspalt und/oder ohne Außenspalt bekannt, wobei die Kühl- und Spülflüssigkeit über spezielle Transportkanäle in der Außenseite des Bohrschaftes transportiert wird. Nachteilig ist, dass der Bohrschaft an der Innenseite eine große Kontaktfläche zum Bohrkern und an der Außenseite eine große Kontaktfläche zum Bohrloch aufweist. Die großen Kontaktflächen an der Innen- und Außenseite des Bohrschaftes führen zu einer starken Reibung. Je grösser die Reibung zwischen dem Bohrschaft und dem Bohrkern bzw. dem Bohrschaft und dem Bohrloch ist, umso geringer sind der Bohrfortschritt der Bohrkrone bei gleicher Leistung des Kernbohrgerätes und die Lebensdauer des Bohrschaftes.

### Darstellung der Erfindung

Die Aufgabe der vorliegenden Erfindung besteht darin, ein Verfahren zur Herstellung eines Bohrschaftes für eine Bohrkrone dahingehend weiterzuentwickeln, dass die Stabilität und die Führung des Bohrschaftes beim Bohren, insbesondere beim Nassbohren mit einer Kühl- und Spülflüssigkeit, verbessert wird. Außerdem sollen der Bohrfortschritt der Bohrkrone erhöht und/oder die Lebensdauer des Bohrschaftes verlängert werden.

Diese Aufgabe wird bei dem eingangs genannten Verfahren erfindungsgemäß durch die Merkmale des unabhängigen Anspruchs 1 gelöst. Vorteilhafte Weiterbildungen sind in den abhängigen Ansprüchen angegeben.

Das Verfahren zur Herstellung eines Bohrschaftes für eine Bohrkrone ist erfindungsgemäß dadurch gekennzeichnet, dass beim stoffschlüssigen Verbinden der Bandkanten mindestens ein Nahtmaterial verwendet wird und bei mindestens einer Verbindungsschweißnaht ein Überstand gegenüber dem Rohrkörper erzeugt wird. Der Bohrschaft wird aus einem Bandmaterial (N = 1) oder mehreren Bandmaterialien (N ≥ 2) hergestellt, wobei die Anzahl der verwendeten Bandmaterialen der Anzahl der Verbindungsschweißnähte entspricht. Bei der Herstellung der Bohrschäfte werden die Bandmaterialien zu einem Rohrkörper geformt und an den Bandkanten verschweißt.

Eine gegenüber dem Rohrkörper überstehende Verbindungsschweißnaht verbessert die Führung des Bohrschaftes beim Bohren. Der Überstand der Verbindungsschweißnaht wird so eingestellt, dass die Verbindungsschweißnaht an der Außenseite des Bohrschaftes mit dem Bohrloch und/oder an der Innenseite des Bohrschaftes mit dem Bohrkern in Kontakt steht. Durch die überstehende Verbindungsschweißnaht weist der Bohrschaft eine geringe Kontaktfläche zum Bohrkern und zum Bohrloch auf und erzeugt eine geringe Reibung. Je geringer die Reibung an der Innenseite zwischen Bohrschaft und Bohrkern bzw. an der Außenseite zwischen Bohrschaft und Bohrloch ist, umso grösser ist der Bohrfortschritt der Bohrkrone bei gleicher Leistung des Kernbohrgerätes und die Lebensdauer des Bohrschaftes ist erhöht. Die Verbindungsschweißnaht kann an einer Innenseite des Bohrschaftes, an einer Außenseite des Bohrschaftes oder an einer Außen- und Innenseite des Bohrschaftes gegenüber dem Rohrkörper überstehen. Um einen Überstand der Verbindungsschweißnaht zu erzeugen, ist ein Nahtmaterial erforderlich. Das Nahtmaterial kann drahtförmig, bandförmig oder pulverförmig ausgebildet sein.

In einer ersten bevorzugten Variante werden die N, N ≥ 1 Bandmaterialien zu einem Spiralrohrkörper geformt und der Spiralrohrkörper wird an den Bandkanten über N spiralförmige Verbindungsschweißnähte stoffschlüssig verbunden. Ein Bohrschaft, der als geschweißter Spiralrohrkörper ausgebildet ist, weist mindestens eine spiralförmige Verbindungsschweißnaht auf, die für den Bohrschaft als Versteifungselement wirkt und die Steifigkeit des Bohrschaftes gegenüber einem rohrförmigen Bohrschaft der gleichen Wandstärke erhöht. Alternativ können Bandmaterialien mit geringeren Wandstärken eingesetzt werden, die beim fertigen Bohrschaft die gleiche Steifigkeit wie ein rohrförmiger Bohrschaft aufweisen. Damit erhöht die Verwendung eines geschweißten Spiralrohrkörpers als Bohrschaft entweder die Steifigkeit des Bohrschaftes im Bohrbetrieb und/oder reduziert das Gewicht des Bohrschaftes. Ein Bohrschaft mit einer höheren Steifigkeit verbessert die Stabilität des Bohrschaftes beim Bohren.

In einer zweiten bevorzugten Variante werden die N, N ≥ 1 Bandmaterialien zu einem Längsrohrkörper geformt werden und der Längsrohrkörper wird an den Bandkanten über N längsverlaufende Verbindungsschweißnähte stoffschlüssig verbunden. Ein Bohrschaft, der als geschweißter Längsrohrkörper ausgebildet ist, weist mindestens eine längsverlaufende Verbindungsschweißnaht auf, die für den Bohrschaft als Versteifungselement wirkt und die Steifigkeit des Bohrschaftes gegenüber einem rohrförmigen Bohrschaft der gleichen Wandstärke erhöht. Alternativ können Bandmaterialien mit geringeren Wandstärken eingesetzt werden, die beim fertigen Bohrschaft die gleiche Steifigkeit wie ein rohrförmiger Bohrschaft aufweisen. Damit erhöht die Verwendung eines geschweißten Längsrohrkörpers als Bohrschaft entweder die Steifigkeit des Bohrschaftes im Bohrbetrieb und/oder reduziert das Gewicht des Bohrschaftes. Ein Bohrschaft mit einer höheren Steifigkeit verbessert die Stabilität des Bohrschaftes gegenüber Verformungen beim Bohren.

In einer ersten bevorzugten Variante wird an einer Außenseite des Bohrschaftes eine Verbindungsschweißnaht mit einem Außenüberstand gegenüber dem Rohrkörper erzeugt. Eine an der Außenseite des Bohrschaftes gegenüber dem Rohrkörper überstehende Verbindungsschweißnaht ermöglicht beim Bohren mit der Bohrkrone eine Führung des Bohrschaftes über das Bohrloch. Der Außenüberstand der Verbindungsschweißnaht wird so eingestellt, dass die Verbindungsschweißnaht nach dem Anbohren der Bohrkrone an der Außenseite des Bohrschaftes mit dem Bohrloch in Kontakt steht. Eine an der Außenseite des Bohrschaftes überstehende spiralförmige Verbindungsschweißnaht kann beim Nassbohren mit der Bohrkrone den Abtransport der mit Bohrklein versetzten, verbrauchten Kühl- und Spülflüssigkeit unterstützen. Die spiralförmige Verbindungsschweißnaht wirkt als Förderwendel für die mit Bohrklein versetzte, verbrauchte Kühl- und Spülflüssigkeit, wenn die Drehrichtung der Bohrkrone und die Verlaufsrichtung der spiralförmigen Verbindungsschweißnaht an der Außenseite des Bohrschaftes übereinstimmen.

In einer zweiten bevorzugten Variante wird an einer Innenseite des Bohrschaftes eine Verbindungsschweißnaht mit einem Innenüberstand gegenüber dem Rohrkörper erzeugt. Eine an der Innenseite des Bohrschaftes gegenüber dem Rohrkörper überstehende Verbindungsschweißnaht ermöglicht beim Bohren mit der Bohrkrone eine Führung des Bohrschaftes über den Bohrkern. Der Innenüberstand der Verbindungsschweißnaht wird so eingestellt, dass die Verbindungsschweißnaht nach dem Anbohren der Bohrkrone an der Innenseite des Bohrschaftes mit dem Bohrkern in Kontakt steht. Eine an der Innenseite des Bohrschaftes überstehende spiralförmige Verbindungsschweißnaht kann beim Nassbohren mit der Bohrkrone den Transport von sauberer Kühl- und Spülflüssigkeit an die Bearbeitungsstelle unterstützen. Die spiralförmige Verbindungsschweißnaht wirkt als Förderwendel für die saubere Kühl- und Spülflüssigkeit, wenn die Drehrichtung der Bohrkrone und die Verlaufsrichtung der spiralförmigen Verbindungsschweißnaht an der Innenseite des Bohrschaftes übereinstimmen.

In einer dritten bevorzugten Variante wird an einer Außen- und Innenseite des Bohrschaftes eine Verbindungsschweißnaht mit einem Außenüberstand und einem Innenüberstand gegenüber dem Rohrkörper erzeugt wird. Eine an der Außen- und Innenseite des Bohrschaftes überstehende Verbindungsschweißnaht ermöglicht beim Bohren mit der Bohrkrone eine Führung des Bohrschaftes sowohl an der Innenseite des Bohrschaftes über den Bohrkern als auch an der Außenseite des Bohrschaftes über das Bohrloch. Der Außen- und Innenüberstand der Verbindungsschweißnaht wird so eingestellt, dass die Verbindungsschweißnaht nach dem Anbohren der Bohrkrone an der Außenseite des Bohrschaftes mit dem Bohrloch und an der Innenseite des Bohrschaftes mit dem Bohrkern in Kontakt steht.

In einer bevorzugten Variante weisen das Nahtmaterial und die N, N ≥ 1 Bandmaterialen die gleichen Materialeigenschaften auf. Wenn das Nahtmaterial und die Bandmaterialien die gleichen Materialeigenschaften aufweisen, entsteht beim Schweißen der Bandkanten ein gleichmäßiger Übergang und das Nahtmaterial kann sich gut mit dem Bandmaterial verbinden.

In einer alternativen bevorzugten Variante weisen das Nahtmaterial und die N, N ≥ 1 Bandmaterialen unterschiedliche Materialeigenschaften auf, wobei das Nahtmaterial besonders bevorzugt eine höhere Zugfestigkeit, eine höhere Verschleißbeständigkeit oder eine höhere Zugfestigkeit und Verschleißbeständigkeit als die Bandmaterialien aufweist. Bei einer Verbindungsschweißnaht, die gegenüber dem Rohrkörper übersteht, soll die Verbindungsschweißnaht während des Bohrbetriebs eine Führung des Bohrschaftes ermöglichen. Je kleiner der Spalt zwischen der Verbindungsschweißnaht und dem Bohrkern an der Innenseite des Bohrschaftes bzw. zwischen der Verbindungsschweißnaht und dem Bohrloch an der Außenseite ist, umso besser wird der Bohrschaft geführt. Durch Reibung zwischen der Verbindungsschweißnaht und dem Bohrkern an der Innenseite bzw. zwischen der Verbindungsschweißnaht und dem Bohrloch an der Außenseite kann die Verbindungsschweißnaht abgetragen werden, wodurch sich die Führung des Bohrschaftes verschlechtert. Durch den Einsatz von Nahtmaterial, das eine höhere Zugfestigkeit, eine höhere Verschleißbeständigkeit oder eine höhere Zugfestigkeit und Verschleißbeständigkeit als die Bandmaterialien aufweist, können die Eigenschaften der Verbindungsschweißnaht beeinflusst werden, so dass die Führung des Bohrschaftes über die Verbindungsschweißnaht möglichst während der gesamten Lebensdauer des Bohrschaftes gewährleistet ist.

In einer alternativen bevorzugten Variante wird beim stoffschlüssigen Verbinden der Bandkanten ein erstes Nahtmaterial und ein zweites Nahtmaterial verwendet, wobei die Materialeigenschaften des ersten Nahtmaterials von den Materialeigenschaften des zweiten Nahtmaterials verschieden sind. Über die Materialeigenschaften des verwendeten Nahtmaterials lassen sich die Eigenschaften der Verbindungsschweißnähte beeinflussen. Das erste Nahtmaterial kann beispielsweise die gleichen Materialeigenschaften wie die Bandmaterialien aufweisen, so dass beim Schweißen ein gleichmäßiger Übergang zwischen den Bandkanten entsteht und sich das erste Nahtmaterial gut mit dem Bandmaterial verbinden kann. Das zweite Nahtmaterial kann beispielsweise eine höhere Zugfestigkeit, eine höhere Verschleißbeständigkeit oder eine höhere Zugfestigkeit und Verschleißbeständigkeit als die Bandmaterialien aufweisen und die Eigenschaften der Verbindungsschweißnähte verbessern.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: eine erste Ausführungsform einer Bohrkrone mit einem spiralrohrförmigen Bohrschaft, der mittels des erfindungsgemäßen Verfahrens zur Herstellung eines Bohrschaftes hergestellt wurde;
- FIGN. 2A, B: einen Längsschnitt durch den Bohrschaft der ersten Bohrkrone der FIG. 1 entlang der Schnittlinie A-A in FIG. 1B (FIG. 2A) sowie ein Detail des Bohrschaftes der FIG. 2A in einer vergrößerten Darstellung (FIG. 2B);
- FIG. 3: eine zweite Ausführungsform einer Bohrkrone mit einem längsnahtgeschweißten Bohrschaft, der mittels des erfindungsgemäßen Verfahrens zur Herstellung eines Bohrschaftes hergestellt wurde;
- FIGN. 4A, B: einen Querschnitt durch den Bohrschaft der zweiten Bohrkrone der FIG. 3 entlang der Schnittlinie A-A in FIG. 3 (FIG. 4A) sowie ein Detail des Bohrschaftes der FIG. 4A in einer vergrößerten Darstellung (FIG. 4B).

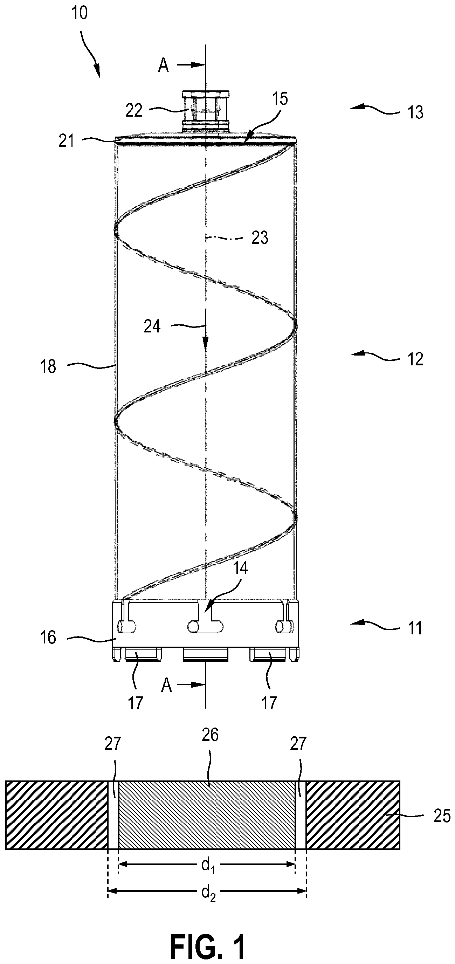

**FIG. 1** zeigt eine erste Ausführungsform einer Bohrkrone **10** mit einem spiralrohrförmigen Bohrschaft, der mittels des erfindungsgemäßen Verfahrens zur Herstellung eines Bohrschaftes mit einer spiralförmigen Verbindungsschweißnaht hergestellt wurde. Die Bohrkrone 10 wird im Folgenden als erste Bohrkrone 10 bezeichnet und umfasst einen Schneidabschnitt **11**, einen Bohrschaftabschnitt **12** und einen Aufnahmeabschnitt **13**. Der Schneidabschnitt 11 und der Bohrschaftabschnitt 12 sind über eine erste Verbindungseinrichtung **14** und der Bohrschaftabschnitt 12 und der Aufnahmeabschnitt 13 über eine zweite Verbindungseinrichtung **15** verbunden.

Die erste Verbindungseinrichtung 14 ist im Ausführungsbeispiel als lösbare Verbindungseinrichtung in Form einer kombinierten Steck-Dreh-Verbindung ausgebildet und die zweite Verbindungseinrichtung 15 ist im Ausführungsbeispiel als nicht-lösbare Verbindungseinrichtung in Form einer Schweißverbindung ausgebildet. Alternativ eignen sich sämtliche lösbaren und nicht-lösbaren Verbindungseinrichtungen für die erste Verbindungseinrichtung 14 zwischen dem Schneidabschnitt 11 und dem Bohrschaftabschnitt 12 und für die zweite Verbindungseinrichtung 15 zwischen dem Bohrschaftabschnitt 12 und dem Aufnahmeabschnitt 13. Die erste Bohrkrone 10 kann eine lösbare erste und zweite Verbindungseinrichtung 14, 15, eine lösbare erste Verbindungseinrichtung 14 und nicht-lösbare zweite Verbindungseinrichtung 15, eine nicht-lösbare erste Verbindungseinrichtung 14 und lösbare zweite Verbindungseinrichtung 15 oder eine nicht-lösbare erste und zweite Verbindungseinrichtung 14, 15 aufweisen. Eine Verbindungseinrichtung wird als lösbar bezeichnet, wenn die Verbindung vom Anwender zerstörungsfrei gelöst werden kann, wie beispielsweise eine Steckverbindung, eine Stiftverbindung oder eine Gewindeverbindung. Eine Verbindungseinrichtung wird als nicht-lösbar bezeichnet, wenn der Anwender die Verbindung nur durch Zerstörung der Verbindungsmittel lösen kann, wie beispielsweise eine Lötverbindung, eine Schweißverbindung oder eine Klebeverbindung.

Der Schneidabschnitt 11 umfasst einen Ringabschnitt **16** und mehrere Schneidsegmente **17**, die mit dem Ringabschnitt 16 verbunden sind. Die Schneidsegmente 17 werden ringförmig angeordnet und bilden einen Schneidring mit Zwischenräumen. Der Schneidabschnitt 11 kann anstatt mehrerer Schneidsegmente 17 auch ein einzelnes als geschlossener Schneidring ausgebildetes Schneidsegment aufweisen. Die Schneidsegmente 17 sind mit dem Ringabschnitt 16 verschweißt, verlötet, verschraubt oder in einer anderen geeigneten Befestigungsart am Ringabschnitt 16 befestigt. Bei einer nicht-lösbaren ersten Verbindungseinrichtung 14 ist der Ringabschnitt 16 unlösbar mit dem Bohrschaftabschnitt 12 verbunden oder der Ringabschnitt 16 entfällt und die Schneidsegmente 17 sind direkt mit dem Bohrschaftabschnitt 12 verbunden.

Der Bohrschaftabschnitt 12 umfasst einen spiralrohrförmigen Bohrschaft **18**, der mit dem Schneidabschnitt 11 über die erste Verbindungseinrichtung 14 und mit dem Aufnahmeabschnitt 13 über die zweite Verbindungseinrichtung 15 verbunden ist. Der Aufnahmeabschnitt 13 umfasst einen Deckel **21** und ein Einsteckende **22**, über das die erste Bohrkrone 10 in einer Werkzeugaufnahme eines Kernbohrgerätes befestigt wird. Im Bohrbetrieb wird die erste Bohrkrone 10 vom Kernbohrgerät um eine Bohrachse **23** angetrieben und in einer Bohrrichtung **24** parallel zur Bohrachse 23 in ein zu bearbeitendes Werkstück **25** bewegt. Die erste Bohrkrone 10 erzeugt im Werkstück 25 einen Bohrkern **26** mit einem Kerndurchmesser **d₁** und ein Bohrloch **27** mit einem Bohrlochdurchmesser **d₂.** Die Schneidsegmente 17 bilden einen Schneidring mit einem Innendurchmesser, der dem Kerndurchmesser d₁ entspricht, und einem Außendurchmesser, der dem Bohrlochdurchmesser d₂ entspricht.

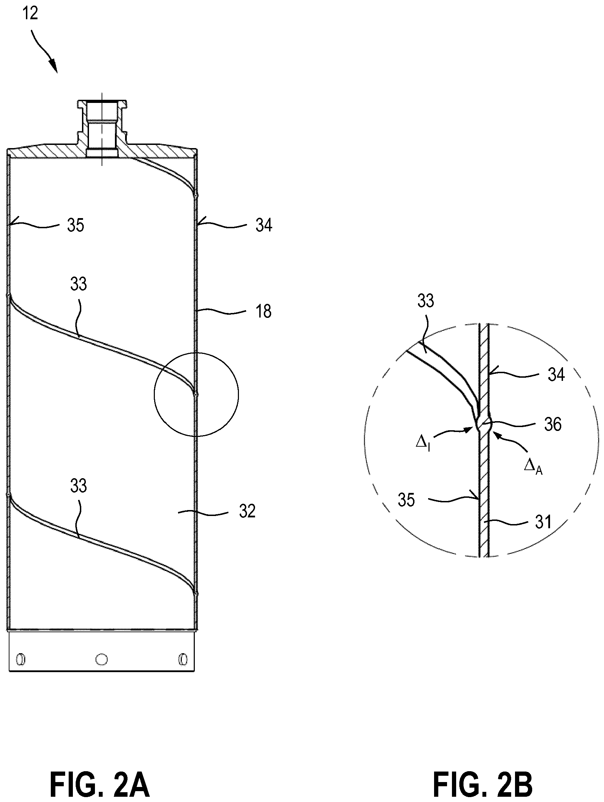

**FIGN. 2A****, B** zeigt einen Längsschnitt durch den Bohrschaft 18 der ersten Bohrkrone 10 der FIG. 1 entlang der Schnittlinie A-A in FIG. 1B (FIG. 2A) sowie ein Detail des Bohrschaftes 18 der FIG. 2A in einer vergrößerten Darstellung (FIG. 2B).

Der Bohrschaft 18 ist als geschweißter Spiralrohrkörper ausgebildet, der aus einem Bandmaterial **31** in Form eines ebenen Blechs durch Formen und Schweißen gefertigt wurde. Das ebene Bandmaterial 31 wurde zu einem Spiralrohrkörper **32** umgeformt und an den Bandkanten über eine spiralförmige Verbindungsschweißnaht **33** verbunden. Die spiralförmige Verbindungsschweißnaht 33 wirkt für den Bohrschaft 18 als Versteifungselement und erhöht die Steifigkeit des Bohrschaftes 18 gegenüber einem rohrförmigen Bohrschaft der gleichen Wandstärke.

Die spiralförmige Verbindungsschweißnaht 33 steht an einer Außenseite **34** des Bohrschaftes 18 mit einem Außenüberstand **Δ_{A}** und an einer Innenseite **35** des Bohrschaftes 18 mit einem Innenüberstand **Δ_{I}** gegenüber dem Spiralrohrkörper 32 über. Um die an der Außen- und Innenseite 34, 35 überstehende spiralförmige Verbindungsschweißnaht 33 zu erzeugen, wird beim Schweißen des Spiralrohrkörpers 32 ein Nahtmaterial **36** verwendet, das das benötigte Materialvolumen zur Verfügung stellt.

Das Nahtmaterial 36 kann pulverförmig, drahtförmig oder bandförmig ausgebildet sein. Über die Materialeigenschaften des Nahtmaterials 36 können die Eigenschaften der spiralförmigen Verbindungsschweißnaht 33 angepasst werden. Das Nahtmaterial 36 kann die gleichen Materialeigenschaften oder unterschiedliche Materialeigenschaften wie das Bandmaterial 31 aufweisen. Wenn Nahtmaterial 36 und Bandmaterial 31 die gleichen Materialeigenschaften aufweisen, entsteht beim Schweißen der Bandkanten ein gleichmäßiger Übergang und das Nahtmaterial 36 kann sich gut mit dem Bandmaterial 31 verbinden. Durch den Einsatz von Nahtmaterial 36, das eine höhere Zugfestigkeit und/oder Verschleißbeständigkeit als das Bandmaterial 31 aufweist, können die Eigenschaften der spiralförmigen Verbindungsschweißnaht 33 beeinflusst werden, so dass die Führung des Bohrschaftes 18 über die spiralförmige Verbindungsschweißnaht 33 möglichst während der gesamten Lebensdauer des Bohrschaftes 18 gewährleistet ist.

Die erste Bohrkrone 10 zeigt eine spiralförmige Verbindungsschweißnaht 33, die an der Außen- und Innenseite 34, 35 des Bohrschaftes 18 übersteht. Die an der Außen- und Innenseite 34, 35 überstehende spiralförmige Verbindungsschweißnaht 33 ermöglicht beim Bohren mit der ersten Bohrkrone 10 eine Führung des Bohrschaftes 18 über das Bohrloch 27 und den Bohrkern 26. Alternativ kann die spiralförmige Verbindungsschweißnaht 33 an der Außenseite 34 des Bohrschaftes 18 mit einem Außenüberstand Δ_{A} oder an der Innenseite 35 des Bohrschaftes 18 mit einem Innenüberstand Δ_{I} gegenüber dem Spiralrohrkörper 32 überstehen. Der Überstand der spiralförmigen Verbindungsschweißnaht 33 wird so eingestellt, dass die spiralförmige Verbindungsschweißnaht 33 an der Außenseite 34 des Bohrschaftes 18 mit dem Bohrloch 27 oder an der Innenseite 35 des Bohrschaftes 18 mit dem Bohrkern 26 in Kontakt steht. Durch die überstehende spiralförmige Verbindungsschweißnaht 33 weist der Bohrschaft 18 eine geringe Kontaktfläche zum Bohrloch 27 oder zum Bohrkern 26 auf und erzeugt eine geringe Reibung. Je geringer die Reibung an der Außenseite 34 zwischen Bohrschaft 18 und Bohrloch 27 oder an der Innenseite 35 zwischen Bohrschaft 18 und Bohrkern 26 ist, umso grösser ist der Bohrfortschritt der ersten Bohrkrone 10 bei gleicher Leistung des Kernbohrgerätes und die Lebensdauer des Bohrschaftes 18 ist erhöht.

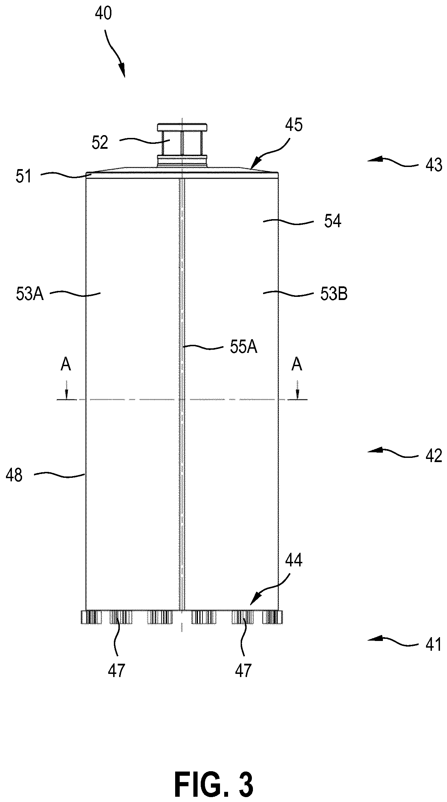

**FIG. 3** zeigt eine zweite Ausführungsform einer Bohrkrone **40** mit einem längsnahtgeschweißten Bohrschaft, der mit dem erfindungsgemäßen Verfahren zur Herstellung eines Bohrschaftes hergestellt wurde. Die Bohrkrone 40 wird im Folgenden als zweite Bohrkrone 40 bezeichnet und umfasst einen Schneidabschnitt **41**, einen Bohrschaftabschnitt **42** und einen Aufnahmeabschnitt **43**, wobei der Schneidabschnitt 41 und der Bohrschaftabschnitt 42 über eine erste Verbindungseinrichtung **44** und der Bohrschaftabschnitt 42 und der Aufnahmeabschnitt 43 über eine zweite Verbindungseinrichtung **45** verbunden sind.

Der Schneidabschnitt 41 umfasst mehrere Schneidsegmente **47**, die einen Schneidring mit einem Innendurchmesser, der dem Kerndurchmesser d₁ entspricht, und einem Außendurchmesser, der dem Bohrlochdurchmesser d₂ entspricht, bilden. Der Bohrschaftabschnitt 42 umfasst einen längsnahtgeschweißten Bohrschaft **48**, der mit den Schneidsegmenten 47 über die erste Verbindungseinrichtung 44 und mit dem Aufnahmeabschnitt 13 über die zweite Verbindungseinrichtung 45 verbunden ist Der Aufnahmeabschnitt 43 umfasst einen Deckel **51** und ein Einsteckende **52**, über das die zweite Bohrkrone 40 in einer Werkzeugaufnahme eines Kernbohrgerätes befestigt wird.

Die erste und zweite Verbindungseinrichtung 44, 45 sind im Ausführungsbeispiel als nicht-lösbare Verbindungseinrichtungen in Form einer Schweißverbindung ausgebildet. Grundsätzlich eignet sich jede erste Verbindungseinrichtung 44, die den Schneidabschnitt 41 und den Bohrschaftabschnitt 42 lösbar oder nicht-lösbar miteinander verbindet, und jede zweite Verbindungseinrichtung 45, die den Bohrschaftabschnitt 42 und den Aufnahmeabschnitt 43 lösbar oder nicht-lösbar miteinander verbindet.

Der Bohrschaft 48 ist in Form eines längsnahtgeschweißten Längsrohrkörpers ausgebildet und wurde aus drei Bandmaterialien **53A**, **53B**, **53C** in Form von ebenen Blechen durch Formen und Schweißen gefertigt. Die Bandmaterialien 53A, 53B, 53C wurden in einer Formanlage zu einem Längsrohrkörper **54** umgeformt und in einer Schweißanlage an den Bandkanten über drei längsverlaufende Verbindungsschweißnähte **55A**, **55B**, **55C** stoffschlüssig verbunden. Die Bandmaterialien 53A, 53B, 53C werden als erstes Bandmaterial 55A, zweites Bandmaterial 55B und drittes Bandmaterial 55C bezeichnet und die Verbindungsschweißnähte werden als erste Verbindungsschweißnaht 55A, zweite Verbindungsschweißnaht 55B und dritte Verbindungsschweißnaht 55C bezeichnet. Die erste Verbindungsschweißnaht 55A verbindet das erste und zweite Bandmaterial 53A, 53B, die zweite Verbindungsschweißnaht 55B verbindet das zweite und dritte Bandmaterial 53B, 53C und die dritte Verbindungsschweißnaht 55C verbindet das erste und dritte Bandmaterial 53A, 53C.

Die zweite Bohrkrone 40 zeigt einen Schneidabschnitt 41 mit mehreren Schneidsegmenten 47, die mittels der ersten Verbindungseinrichtung 44 am Bohrschaft 48 unlösbar befestigt sind. Der Schneidabschnitt 41 kann anstatt mehrerer Schneidsegmente 47 auch ein einzelnes als geschlossener Schneidring ausgebildetes Schneidsegment aufweisen. Außerdem kann der Schneidabschnitt 41 einen Ringabschnitt aufweisen, der zwischen den Schneidsegmenten 47 und dem Bohrschaft 48 angeordnet ist. Die Schneidsegmente 47 werden am Ringabschnitt verschweißt, verlötet, verschraubt oder in einer anderen geeigneten Befestigungsart am Ringabschnitt befestigt und der Ringabschnitt und der Bohrschaft 48 werden mittels der ersten Verbindungseinrichtung 44 lösbar oder unlösbar verbunden. Der Ringabschnitt kann wie der Bohrschaft 48 als längsnahtgeschweißtes Rohr ausgebildet sein.

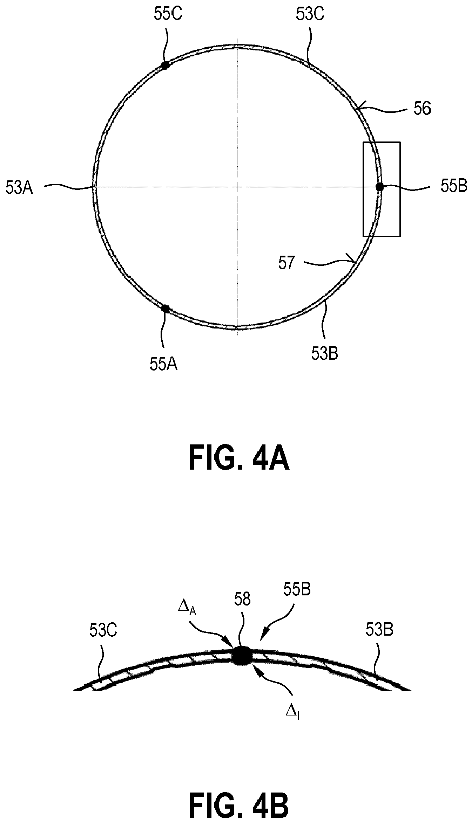

**FIGN. 4A****, B** zeigen einen Querschnitt durch den Bohrschaft 48 der zweiten Bohrkrone 40 der FIG. 3 entlang der Schnittlinie A-A in FIG. 3 (FIG. 4A) sowie ein Detail des Bohrschaftes 48 der FIG. 4A in einer vergrößerten Darstellung (FIG. 4B).

Die längsverlaufenden Verbindungsschweißnähte 55A, 55B, 55C des Bohrschaftes 48 stehen an einer Außenseite **56** des Bohrschaftes 46 mit einem Außenüberstand Δ**_{A}** und an einer Innenseite **57** des Bohrschaftes 48 mit einem Innenüberstand Δ_{I} gegenüber dem Längsrohrkörper 54 über. Um die gegenüber dem Längsrohrkörper 54 an der an der Außen- und Innenseite 56, 57 überstehenden Verbindungsschweißnähte 55A, 55B, 55C zu erzeugen, wird beim Schweißen des Längsrohrkörper 54 ein Nahtmaterial **58** verwendet, das das benötigte Materialvolumen zur Verfügung stellt.

Das Nahtmaterial 58 kann pulverförmig, drahtförmig oder bandförmig ausgebildet sein. Über die Materialeigenschaften des Nahtmaterials 58 können die Eigenschaften der Verbindungsschweißnähte 55A, 55B, 55C angepasst werden. Das Nahtmaterial 58 kann die gleichen Materialeigenschaften oder unterschiedliche Materialeigenschaften wie die Bandmaterialien 53A, 53B, 53C aufweisen. Wenn das Nahtmaterial 58 und die Bandmaterialien 53A, 53B, 53C die gleichen Materialeigenschaften aufweisen, entsteht beim Schweißen der Bandkanten ein gleichmäßiger Übergang und das Nahtmaterial 58 kann sich gut mit den Bandmaterialien 53A, 53B, 53C verbinden. Durch den Einsatz von Nahtmaterial 58, das beispielsweise eine höhere Verschleißbeständigkeit und/oder eine höhere Zugfestigkeit als die Bandmaterialien 53A, 53B, 53C aufweist, können die Eigenschaften der Verbindungsschweißnähte 55A, 55B, 55C beeinflusst werden.

Die zweite Bohrkrone 40 zeigt einen Bohrschaft 48 mit Verbindungsschweißnähten 55A, 55B, 55C, die an der Außen- und Innenseite 56, 57 des Bohrschaftes 48 gegenüber dem Längsrohrkörper 54 überstehen. Alternativ können die Verbindungsschweißnähte 55A, 55B, 55C an der Außenseite 56 des Bohrschaftes 48 mit dem Außenüberstand Δ_{A} oder an der Innenseite 57 des Bohrschaftes 48 mit dem Innenüberstand Δ_{I} gegenüber dem Längsrohrkörper 54 überstehen. Der Überstand der Verbindungsschweißnähte 55A, 55B, 55C wird so eingestellt, dass die Verbindungsschweißnähte 55A, 55B, 55C nach dem Anbohren an der Außenseite 56 des Bohrschaftes 48 mit dem Bohrloch 27 oder an der Innenseite 56 des Bohrschaftes 48 mit dem Bohrkern 26 in Kontakt steht.

## Patentansprüche

1. Verfahren zur Herstellung eines Bohrschaftes (18; 48) für eine Bohrkrone (10; 40), die einen Bohrkern (26) mit einem Kerndurchmesser (d₁) und ein Bohrloch (27) mit einem Bohrlochdurchmesser (d₂) in einem Werkstück (25) erzeugt, aufweisend:
▪ N, N ≥ 1 Bandmaterialien (31; 53A, 53B, 53C) werden zu einem Rohrkörper (32; 54) geformt und
▪ der Rohrkörper (32; 54) wird an den Bandkanten über N Verbindungsschweißnähte (33; 55A, 55B, 55C) stoffschlüssig verbunden,
**dadurch gekennzeichnet, dass** beim stoffschlüssigen Verbinden der Bandkanten mindestens ein Nahtmaterial (36; 58) verwendet wird und bei mindestens einer Verbindungsschweißnaht (33; 55A, 55B, 55C) ein Überstand gegenüber dem Rohrkörper (34; 54) erzeugt wird.

2. Verfahren nach Anspruch 1, **dadurch gekennzeichnet, dass** die N, N ≥ 1 Bandmaterialien (31) zu einem Spiralrohrkörper (32) geformt werden und der Spiralrohrkörper (32) an den Bandkanten über N spiralförmige Verbindungsschweißnähte (33) stoffschlüssig verbunden wird.

3. Verfahren nach Anspruch 1, **dadurch gekennzeichnet, dass** die N, N ≥ 1 Bandmaterialien (53A, 53B, 53C) zu einem Längsrohrkörper (54) geformt werden und der Längsrohrkörper (54) an den Bandkanten über N längsverlaufende Verbindungsschweißnähte (55A, 55B, 55C) stoffschlüssig verbunden wird.

4. Verfahren nach einem der Ansprüche 1 bis 3, **dadurch gekennzeichnet, dass** an einer Außenseite (34; 56) des Bohrschaftes (18; 48) eine Verbindungsschweißnaht (33; 55A, 55B, 55C) mit einem Außenüberstand (Δ_{A}) gegenüber dem Rohrkörper (32; 54) erzeugt wird.

5. Verfahren nach einem der Ansprüche 1 bis 3, **dadurch gekennzeichnet, dass** an einer Innenseite (35; 57) des Bohrschaftes (18; 48) eine Verbindungsschweißnaht (33; 55A, 55B, 55C) mit einem Innenüberstand (Δ_{I}) gegenüber dem Rohrkörper (32; 54) erzeugt wird.

6. Verfahren nach einem der Ansprüche 1 bis 3, **dadurch gekennzeichnet, dass** an einer Außen- und Innenseite (34, 35; 56, 57) des Bohrschaftes (18; 48) eine Verbindungsschweißnaht (33; 55A, 55B, 55C) mit einem Außenüberstand (Δ_{A}) und einem Innenüberstand (Δ_{I}) gegenüber dem Rohrkörper (32; 54) erzeugt wird.

7. Verfahren nach einem der Ansprüche 1 bis 6, **dadurch gekennzeichnet, dass** das Nahtmaterial (36; 58) und die N, N ≥ 1 Bandmaterialen (31; 53A, 53B, 53C) die gleichen Materialeigenschaften aufweisen.

8. Verfahren nach einem der Ansprüche 1 bis 6, **dadurch gekennzeichnet, dass** das Nahtmaterial (36; 58) und die N, N ≥ 1 Bandmaterialen (31; 53A, 53B, 53C) unterschiedliche Materialeigenschaften aufweisen.

9. Verfahren nach Anspruch 8, **dadurch gekennzeichnet, dass** das Nahtmaterial (36; 58) eine höhere Zugfestigkeit, eine höhere Verschleißbeständigkeit oder eine höhere Zugfestigkeit und Verschleißbeständigkeit als die Bandmaterialien (31; 53A, 53B, 53C) aufweist.

10. Verfahren nach einem der Ansprüche 1 bis 6, **dadurch gekennzeichnet, dass** beim stoffschlüssigen Verbinden der Bandkanten ein erstes Nahtmaterial und ein zweites Nahtmaterial verwendet wird, wobei die Materialeigenschaften des ersten Nahtmaterials von den Materialeigenschaften des zweiten Nahtmaterials verschieden sind.
